# EUROPÄISCHE PATENTSCHRIFT

(11) **EP 2 035 119 B1**
(45) Veröffentlichungstag und Bekanntmachung des Hinweises auf die Patenterteilung: **03.11.2010**
(21) Anmeldenummer: 07763730.4
(22) Anmeldetag: 03.07.2007
(51) Int. Cl.: B01D 53/62, B01D 53/68, B01D 53/64

(54) **VERFAHREN ZUM KÜHLEN UND KONVERTIEREN VON HEISSEN ABGASEN SOWIE VORRICHTUNG ZUR DURCHFÜHRUNG DIESES VERFAHRENS**
METHOD FOR COOLING AND CONVERTING HOT EXHAUST GASES, AND DEVICE FOR CARRYING OUT SAID METHOD
PROCÉDÉ DE REFROIDISSEMENT ET DE CONVERSION DE GAZ D'ÉCHAPPEMENT CHAUDS, ET DISPOSITIF POUR LA MISE EN OEUVRE DE CE PROCÉDÉ

(30) Priorität: 05.07.2006 AT 52706 U
(43) Veröffentlichungstag der Anmeldung: 18.03.2009
(73) Patentinhaber: Patco Engineering GmbH, 6300 Zug (CH)
(72) Erfinder: Edlinger Alfred, 6780 Bartholomäberg (AT)
(74) Vertreter: Haffner, Thomas M.
(86) Internationale Anmeldenummer: PCT/AT2007/000330
(87) Internationale Veröffentlichungsnummer: WO 2008/003110

(56) Entgegenhaltungen:
- WO-A-2005/094153
- US-A- 5 693 293
- US-A1- 2004 191 146

## Beschreibung

Die Erfindung bezieht sich auf ein Verfahren zum Kühlen und Konvertieren von heißen Abgasen, insbesondere Verbrennungsgasen, oder Reaktionsgasen aus vergasungs- oder Pyrolysereaktionen von reduzierend geführten Hochtemperatur-Reaktoren der Metallurgie, anorganischen Technologie und Umwelttechnologie sowie eine Vorrichtung zur Durchführung dieses Verfahrens.

Wenn heiße Verbrennungsabgase, welche im Fall von Einschmelzreaktoren auch eine Reihe von Schadstoffen und Wertstoffen enthalten können, wobei zu den Wertstoffen beispielsweise Metalldämpfe zählen, mit Luft abgekühlt werden, führt dies während des Abkühlprozesses zur Bildung von toxischen Substanzen, wobei in Anwesenheit von Chloriden beispielsweise Dioxine, Furane und gemeinsam mit dem Stickstoff der Luft Stickoxide gebildet werden können. Bei relativ langsamer Abkühlung werden auch große Mengen plastischer Phasen ausgebildet, wobei es zu Anpackungen an den Abgasleitungen kommt, deren Reinigung bzw. Beseitigung mit hohem Aufwand verbunden ist. Hohe Mengen an Gasen erfordern groß bauende Filter, in welchen die bei der Abkühlung ausfallenden Feststoffe abgetrennt werden.

Die WO 2005/094153 A1 betrifft eine Einrichtung zum Oxidieren, Reduzieren, Kalzinieren, Sintern oder Schmelzen von Stäuben mit einem Dosierzyklon, in welchen die Stäube eingetragen werden und an welchem ein tangentialer Anschluss für den Eintrag von Trägergasen mündet. Die an den Dosierzyklon in axialer Richtung anschließende Brennkammer ist für den Einstoß von flüssigen, in Flüssigkeit gelösten, in Gas suspendierten oder gasförmigen oxidierbaren Substanzen geeignet. Koaxial zur Austragsöffnung des Dosierzyklons ist im Inneren des Dosierzyklons eine Lanze angeordnet.

Der Erfindung liegt nun die Aufgabe zu Grunde, ein Verfahren der eingangs genannten Art vorzuschlagen, mit welchem es gelingt die Entstehung von Schadstoffen, und insbesondere Dioxinen, Furanen und Stickoxiden, hintanzuhalten und gleichzeitig die Gesamtmenge an gekühlten Gasen so gering wie nur möglich zu halten, um mit klein bauenden Filtereinrichtungen bzw. Einrichtungen zur Abtrennung von Feststoffen das Auslangen zu finden.

Zur Lösung dieser Aufgabe besteht das erfindungsgemäße Verfahren im Wesentlichen darin, dass in einer ersten Stufe unter Einsatz von Sauerstoff und Wasser oder Wasserdampf eine Kühlung auf Temperaturen von zwischen 605° C und 1050° C unter gleichzeitiger Oxidation von CO und H₂ und reduzierten Anteilen von Zn, Cd, Cu und/oder Hg vorgenommen wird, worauf in einer zweiten Stufe auf eine Temperatur über dem Taupunkt von Wasser gekühlt wird.

Dadurch, dass das Verfahren zweistufig durchgeführt wird, kann in einer ersten Stufe ein überaus rasches Abkühlen unter Eindüsen von Wasser oder Eispartikeln erfolgen, wobei zum Verdüsen von Wasser bzw. wasserdampf technisch reiner Sauerstoff eingesetzt wird, um die Ausbildung von Stickoxiden zu verhindern. Es wird somit Wasser mit Sauerstoff eingedüst, wobei Sauerstoff teilweise auch als Flüssigsauerstoff eingesetzt werden kann, was zum Eindüsen von Eispartikeln führt. Unter Berücksichtigung der hohen Temperaturen der verbrennungsgase wird somit die für das Kühlen erforderliche Energie zu einem nicht unerheblichen Teil aus der Umwandlung vom festen bzw. flüssigen Aggregatszustand des Wassers in Dampf gewonnen und lediglich ein geringer Beitrag durch das kühle Treibgas, nämlich den Sauerstoff, geleistet. Der Einsatz von flüssigem Wasser ist hier bevorzugt. Es kann somit mit einer geringen Menge an Treibgas das Auslangen gefunden werden und trotzdem eine rasche Abkühlung erzwungen werden, wodurch die Ausbildung von plastischen Phasen hintangehalten wird. Wichtig ist hierbei, dass diese erste Stufe, in welcher eine Oxidation und gegebenenfalls eine pyrohydrolytische Spaltung von Verbindungen, wie beispielsweise CuCl₂, CuSO₄ oder ZnCl₂, vorgenommen wird, so durchgeführt wird, dass die Oxidation bei Temperaturen über 650° C abgeschlossen ist. Es soll nämlich sichergestellt werden, dass CO und H₂ vollständig verbrannt sind, um in der Folge zu gewährleisten, dass kein freier Wasserstoff und auch kein freies CO mehr in den Abgasen enthalten ist. Bei der oxidativen Umsetzung gelingt es CO und H₂ vollständig zu oxidieren und Metalldämpfe, wie z.B. Zink, Kadmium, Kupfer und/oder Quecksilber, in die entsprechenden Oxide umzuwandeln, wobei auf Grund der raschen Abkühlung in der Folge dann unmittelbar Feststoffe vorliegen. Wesentlich ist aber auch die Umwandlung von gegebenenfalls vorhandenem Kupferchlorid (cuCl₂ + H₂O→ CuO + 2HCl) durch pyrohydrolytische Spaltung, da auf diese weise ein wesentlicher Katalysator für die Dioxin-Resynthese eliminiert wird, welche in Anwesenheit von Chloriden zu befürchten wäre. Es wird somit ein von toxischen Substanzen freies Abgas mit oxidierten Feststoffen im Gasstrom gebildet, wobei bei der erfindungsgemäß im Anschluss vorgenommenen zweiten Stufe eine weitere Kühlung auf Temperaturen über dem Taupunkt von Wasser vorgenommen wird, um eine Feststofftrennung nicht durch kondensierendes Wasser zu beeinträchtigen und mit kleinen Filtern das Auslangen zu finden. Diese zweite Kühlung ist hierbei relativ anspruchslos, was den Zeitaufwand und die Kühlgeschwindigkeit anlangt, da hier keine unerwünschten Umsetzungen mehr befürchtet werden müssen. Gemäß einer bevorzugten Weiterbildung des erfindungsgemäßen Verfahrens wird so vorgegangen, dass in der ersten Stufe Wasser und/oder Wasserdampf mit technisch reinem Sauerstoff, bevorzugt flüssigem Sauerstoff, verdüst bzw. vernebelt wird. Die Vernebelung bzw. Verdüsung führt auf Grund der enorm großen Oberfläche der Wassertröpfchen bzw. Eispartikel zu extrem raschen Stoff- und Wärmetausch und zu einer überaus raschen und intensiven Durchmischung und damit zu einer überaus raschen Abkühlung auf die gewünschten Temperaturen, bei welchen weitere Umsetzungen nicht mehr befürchtet werden müssen und gleichzeitig H₂ und CO vollständig umgesetzt sind.

Mit Vorteil wird in der Folge so vorgegangen, dass in der zweiten Stufe indirekt gekühltes Druckwasser zerstäubt und/oder Wasser mit Luft zerstäubt oder vernebelt wird. Im Falle einer indirekten Kühlung kann in dieser Stufe die Abwärme zur Dampferzeugung genutzt werden, wobei hier jedenfalls mit Vorteil so gearbeitet wird, dass das in der zweiten Stufe auf Temperaturen über dem Taupunkt von Wasser gekühlte Gas einer Feststofftrennung, wie z.B. einem Filter oder einem Zyklon, zugeführt wird. Solange der Taupunkt von Wasser nicht erreicht ist, gelingt die Feststofftrennung in einem zyklon oder mit klein bauenden Filtern, ohne dass es zur Ausbildung von schwer zu entfernenden Schlämmen kommt.

Mit besonderem Vorteil wird das erfindungsgemäße Verfahren so durchgeführt, dass die Abkühlung und Oxidation in der ersten Stufe auf Temperaturen zwischen 800° C und 1050° C, vorgenommen wird, wobei sich die bevorzugte Temperatur zwischen 800° C und 1050° C unter anderem daraus ergibt, dass unterhalb von 1050°C die Ausbildung plastischer Phasen nicht mehr befürchtet werden muss und bei Temperaturen um 800° C die Zündtemperatur von H₂ und CO mit Sicherheit überschritten ist, um eine vollständige Verbrennung mit Sauerstoff zu gewährleisten. Für eine derartige Abkühlung hat es sich gezeigt, dass bei entsprechender Einstellung der vernebelung bzw. Verdüsung mit Sauerstoff, Wasser bzw. Wasserdampf eine zeit von Bruchteilen von Sekunden (0,01 - 0,2 sek.) bei einem Tröpfchendurchmesser von 40 - 250 m ausreicht, um die gewünschten Temperaturen zu erreichen.

Eine Kühlung der Düse und gleichzeitig ein Einstoß von Sauerstoff kann zusätzlich und in vorteilhafter Weise so vorgenommen werden, dass in der ersten Stufe flüssiger Sauerstoff als Sperrmedium konzentrisch zu einer Lavaldüse zum Zerstäuben von Wasser mit Sauerstoff eingebracht wird.

Insgesamt ergibt sich somit ein kombiniertes Verfahren, bei welchem die erste Verfahrensstufe in einem Gaskonverter vorgenommen wird, wohingegen die zweite Verfahrensstufe einer konventionellen Kühlung entspricht, wobei insgesamt hohe Rohgasmengen bei hohen Temperaturen mit reduzierbaren bzw. pyrohydrolytisch umsetzbaren Substanzen in gefahrlose Abgase gereinigt werden können. Vor allen Dingen die Elimination der Möglichkeit einer Re-Synthese von Dioxinen, Furanen und der thermischen Bildung von Stickoxiden aus Luft-N₂ mit Luft-O₂ oder ähnlichen Schadstoffen ist hier von wesentlichem Vorteil. Dies gelingt allerdings nur, wenn in der ersten Stufe weitestgehend stickstofffreie Gase eingesetzt werden.

In der zweiten Kühlstufe kann Luft als Zerstäubermedium oder Druckwasser eingedüst werden. Auf Grund der geringen zusätzlich eingebrachten Gasmenge wird ein mit Fest- und Schwebestoffen relativ hoch konzentriertes Gas gebildet, wodurch die Vorabscheidung von Feststoffen in einem Zyklon wirtschaftlich möglich wird und das erforderliche Filtervolumen weiter wesentlich verringert werden kann. Neben der Verringerung der Filtervolumina ergibt sich naturgemäß gleichzeitig auch eine Verringerung der erforderlichen Ventilatorleistung und damit eine entsprechende energetische Einsparung, wobei alle diese Einsparungen den erhöhten Sauerstoffverbrauch in höchstem Maße überkompensieren.

Der zweite Kessel bzw. die zweite Stufe kann als Dampfkessel bzw. konvektiver Kühler ausgebildet sein.

Die erfindungsgemäße Vorrichtung zur Durchführung des erfindungsgemäßen Verfahrens ist mit Vorteil dahingehend weitergebildet, dass an einen ersten Gaskonverter wenigstens eine Lavaldüse angeschlossen ist, über welche Sauerstoff und Wasser vernebelt eingedüst werden. Die Verwendung einer Lavaldüse zur Vernebelung von Wasser mittels Sauerstoff hat hierbei den Vorteil, dass die erforderliche Gasmenge weiter reduziert werden kann, wobei es sich gezeigt hat, dass technisch reiner Sauerstoff ja nur in demjenigen Maße für die Oxidation erforderlich ist, als dies dem Anteil an CxHy, CO, H₂ und Metallen bzw. pyrohydrolytisch umsetzbaren Substanzen entspricht. Lavaldüsen werden auch deshalb verwendet, um den Verdampfungspunkt weg von der Düse weit in den Konverterraum zu verlegen, um die Gefahr von Verkalkungen zu eliminieren. Für das Eindüsen selbst genügen hierbei relativ geringe Gasmengen und die erforderliche Durchwirbelung und rasche Kühlung wird dabei in erster Linie durch Lavaldüsen sichergestellt, bei welchen die Strömung in der Folge mit Überschallgeschwindigkeit in den Verdampfungsbereich im Inneren des Gaskonverters, welchem die heißen Rohgase zugeführt werden, eintritt.

Eine besonders bevorzugte Weiterbildung der erfindungsgemäßen Vorrichtung besteht darin, dass Lavaldüsen für die Zerstäubung von Wasser mit Sauerstoff an den ersten Gaskonverter nahe der Aufgabe des heißen Abgases mündend angeordnet sind, wobei vorzugsweise an den ersten Gaskonverter Verdampfungskühldüsen, Befeuchtungsdüsen oder ein Abhitzekessel als zweite Stufe angeschlossen ist.

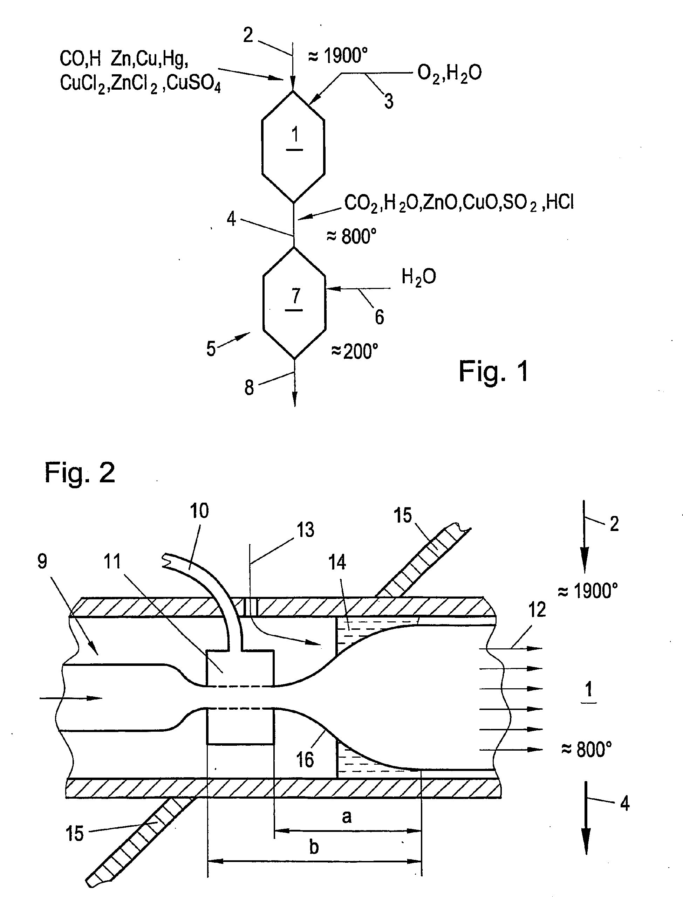

Die Erfindung wird nachfolgend anhand eines in der Zeichnung schematisch dargestellten Ausführungsbeispiels näher erläutert. In dieser zeigen Fig.1 eine schematische Darstellung der erfindungsgemäßen Verfahrensschritte und Fig.2 eine vergrößerte schematische Darstellung einer für den Einstoß von Wasser und Sauerstoff geeignete Düse.

In Fig.1 ist mit 1 der Reaktionsraum eines Gaskonverters bezeichnet, welchem über eine Leitung 2 heiße Verbrennungsgase bzw. Rohgase zugeführt werden. In diesen Gasraum 1 des Konverters werden über die Leitung 3 Sauerstoff und Wasser eingestoßen. Das über die Rohgasleitung bei Temperaturen von etwa 1900° C eingestoßene Gas kann neben CO, H₂, Zn, Zu und Hg eine Reihe weiterer Metalle oder Metallverbindungen enthalten. Insbesondere kann im Rohgas CuCl₂, ZnCl₂ oder CuSO₄ enthalten sein. Im Einschmelzvergaser können beispielsweise Elektronik-, Schrott, Schredder-Rückstände, Hausmüll, Sondermüll und Rückstände aus der Laugung bei der zinkmetallurgie aufgeschmolzen und aufgearbeitet werden. Ebenso können natürlich speziell bei derartigen Rückständen beim Einschmelzen von getrockneten Zink-Eisenkonzentraten auch Schwefel sowie Schwefelverbindungen im Gas enthalten sein. Auch Elektronikschrott, Kupolofen-, Eisenbad- oder Schredderrückstände können hier eingesetzt werden.

Das im Gasraum 1 des Konverters gekühlte und rasch abgeschreckte Gas verlässt bei Temperaturen von etwa 800° C den Konverterraum 1 über die Leitung 4 und gelangt in einen Abhitzekessel 5, in welchen gegebenenfalls über eine Leitung 6 Druckwasser eingedüst werden kann, sofern eine raschere Abkühlung gewünscht wird. Alternativ kann dieser Abhitzekessel 5 mit Kühlschlangen umgeben sein, um auf diese Weise eine Dampferzeugung bei gleichzeitiger indirekter Kühlung der Gase im Kesselraum 7 zu ermöglichen. Das gekühlte und Feststoffe enthaltende Gas verlässt die Anlage über die Leitung 8 und kann in der Folge einer nicht näher dargestellten konventionellen Feststofftrennung unterworfen werden, wobei hier nach einem Zyklon ein entsprechender Filter eingesetzt werden kann.

Bei der Darstellung nach Fig.2 ist mit 9 eine Druckwasserleitung dargestellt, über welche Druckwasser beispielsweise mit einem Druck von 2 bis 35 bar eingestoßen werden kann. Über die Leitung 10 wird Sauerstoff zugeführt, wobei hier beispielsweise als Gasdruck ein Druck zwischen 2 und 8 bar eingestellt werden kann. Der Sauerstoff gelangt über die Sauerstoffkammer 11 und einen Heißgasdiffusor in der Leitung 9 zu einer als Lavaldüse ausgebildeten Düse 16, deren Lavalbereich mit a angedeutet ist. Die Mischstrecke, über welche Sauerstoff mit dem Druckwasser vermischt wird, wird durch den Bereich b bezeichnet. Das Sauerstoff-Wasser-Gemisch bildet hierbei zwei Phasen aus und tritt mit Überschallgeschwindigkeit, wie durch die Pfeile 12 angedeutet, in den Konverterraum aus. Über die Leitung 2 wird diesem Konverter wiederum das Rohgas zugeführt, wobei nach der Umsetzung mit dem Sauerstoff-Wasser-Gemisch unmittelbar ein oxidiertes Heißgas gewonnen wird, das wiederum über die mit 4 angedeutete Leitung abgezogen werden kann. Die Abkühlung erfolgt im Bereich der Beaufschlagung des Rohgasstroms mit dem die Lavaldüse verlassenden Zweistoffgemisch auf Temperaturen von etwa 800° C in überaus kurzer Zeit, wobei eine Wasser-/Eis-Tröpfchengröße zwischen 40 und 300 m gemessen wurde. Zur Kühlung und zur Abdichtung bzw. gegen Rückströmung aus dem Konverterraum kann über eine Leitung 13 Flüssigsauerstoff eingebracht werden, wobei sich ein Flüssigsauerstoffpolster 14 ausbildet, welcher ein Sperrmedium darstellt und eine Rückströmung bzw. eine Anbackung an der Düse mit Sicherheit verhindert wird. Mit 15 ist hierbei der Mantel des Gaskonverters bezeichnet, dessen Gasraum mit 1 in Fig.1 dargestellt wurde.

Die im nicht dargestellten Einschmelzvergaser aufzuschmelzenden Produkte können unterschiedlicher Natur sein, wobei hier in erster Linie zinkhältige, kupferhältige oder andere Rückstände aufgearbeitet und aufgeschmolzen werden können, welche in der Folge eine entsprechend aufwändige Gasreinigung erfordern würden.

## Patentansprüche

1. Verfahren zum Kühlen und Konvertieren von heißen Abgasen aus Vergasungs- oder Pyrolysereaktionen von reduzierend geführten Hochtemperatur-Reaktoren der Metallurgie, anorganischen Technologie und Umwelttechnologie, bei welchem in einer ersten Stufe unter Einsatz von Sauerstoff und Wasser oder Wasserdampf eine Kühlung auf Temperaturen von zwischen 605° C und 1050° C unter gleichzeitiger Oxidation von CO und H₂ und reduzierten Anteilen von Zn, Cd, Cu und/oder Hg vorgenommen wird, worauf in einer zweiten Stufe auf eine Temperatur über dem Taupunkt von Wasser gekühlt wird.

2. Verfahren nach Anspruch 1, **dadurch gekennzeichnet, dass** die Kühlung zusätzlich unter pyrohydrolytischer Spaltung von CuCl₂, CuSo₄, ZnCl₂ vorgenommen wird.

3. Verfahren nach Anspruch 1 oder 2, **dadurch gekennzeichnet, dass** in der ersten Stufe Wasser und/oder Wasserdampf mit technisch reinem Sauerstoff verdüst wird.

4. Verfahren nach Anspruch 1, 2 oder 3, **dadurch gekennzeichnet, dass** in der ersten Stufe Wasser und/oder wasserdampf mit technisch reinem, flüssigem Sauerstoff verdüst wird.

5. Verfahren nach einem der Ansprüche 1 bis 4, **dadurch gekennzeichnet, dass** in der zweiten Stufe indirekt gekühltes Druckwasser zerstäubt und/oder Wasser mit Luft zerstäubt oder vernebelt wird.

6. Verfahren nach einem der Ansprüche 1 bis 5, **dadurch gekennzeichnet, dass** das in der zweiten Stufe auf Temperaturen über dem Taupunkt von Wasser gekühlte Gas einer Feststofftrennung zugeführt wird.

7. Verfahren nach Anspruch 6, **dadurch gekennzeichnet, dass** die Feststofftrennung als Filter oder Zyklon ausgeführt ist.

8. Verfahren nach einem der Ansprüche 1 bis 7, **dadurch gekennzeichnet, dass** die Abkühlung und Oxidation in der ersten Stufe auf Temperaturen unterhalb des plastischen Bereichs von festen Anteilen im Gas vorgenommen wird.

9. Verfahren nach Anspruch 8, **dadurch gekennzeichnet, dass** die Abkühlung und Oxidation in der ersten Stufe auf Temperaturen zwischen 800° C und 1050° C vorgenommen wird.

10. Verfahren nach einem der Ansprüche 1 bis 9, **dadurch gekennzeichnet, dass** in der ersten Stufe flüssiger Sauerstoff als Sperrmedium konzentrisch zu einer Lavaldüse (16) zum Zerstäuben von Wasser mit Sauerstoff eingebracht wird.

11. Vorrichtung zum Kühlen und Konvertieren von heißen Abgasen, insbesondere Verbrennungsgasen, oder Reaktionsgasen aus Vergasungs- oder Pyrolysereaktionen von reduzierend geführten Hochtemperatur-Reaktoren der Metallurgie, anorganischen Technologie und Umwelttechnologie mit einem Gaskonverter, in den eine Leitung (2) für die heißen Abgase mündet und an welche eine Leitung (4) zum Abziehen der zumindest teilweise gekühlten Abgase angeschlossen ist, bei welcher an den Gaskonverter wenigstens eine Lavaldüse (16) angeschlossen ist, über welche Sauerstoff und Wasser vernebelt eingedüst werden.

12. Vorrichtung nach Anspruch 11, **dadurch gekennzeichnet, dass** Lavaldüsen (16) für die Zerstäubung von Wasser mit Sauerstoff an den Gaskonverter nahe der Aufgabe des heißen Abgases mündend angeordnet sind.

13. Vorrichtung nach Anspruch 11 oder 12, **dadurch gekennzeichnet, dass** an den Gaskonverter Verdampfungskühldüsen, Befeuchtungsdüsen oder ein Abhitzekessel (5) als zweite Stufe angeschlossen ist.

## Claims

1. A method for cooling and converting hot exhaust gases from gasification or pyrolysis reactions of reducingly controlled high-temperature reactors used in metallurgy, inorganic technology and environmental technology, wherein cooling to temperatures between 605°C and 1050°C is performed in a first stage using oxygen and water or water vapour, while simultaneously oxidizing CO and H₂ as well as reduced portions of Zn, Cd, CU and/or Hg, whereupon cooling to a temperature above the dew point of water is performed in a second stage.

2. A method according to claim 1, **characterized in that** cooling is performed with the additional pyrohydrolytic cleavage of CuCl₂, CuSO₄, ZnCl₂.

3. A method according to claim 1 or 2, **characterized in that**, in the first stage, water and/or water vapour is atomized with technically pure oxygen.

4. A method according to claim 1, 2 or 3, **characterized in that**, in the first stage, water and/or water vapour is atomized with technically pure, liquid oxygen.

5. A method according to any one of claims 1 to 4, **characterized in that**, in the second stage, indirectly cooled pressurized water is atomized and/or water is atomized or nebulized with air.

6. A method according to any one of claims 1 to 5, **characterized in that** the gas cooled in the second stage to temperatures above the dew point of water is fed to a solids separation means.

7. A method according to claim 6, **characterized in that** said solids separation means is configured as a filter or a cyclone.

8. A method according to any one of claims 1 to 7, **characterized in that** said cooling and oxidizing in the first stage is performed at temperatures below the plastic range of solid portions contained in the gas.

9. A method according to claim 8, **characterized in that** said cooling and oxidizing in the first stage is performed at temperatures between 800°C and 1050°C.

10. A method according to any one of claims 1 to 9, **characterized in that**, in the first stage, liquid oxygen is introduced as a blocking medium concentrically with a Laval nozzle (16) for atomizing water with oxygen.

11. A device for cooling and converting hot exhaust gases, in particular combustion gases, or reaction gases from gasification or pyrolysis reactions of reducingly controlled high-temperature reactors used in metallurgy, inorganic technology and environmental technology, including a gas converter into which a duct (2) for the hot exhaust gases opens and to which a duct (4) is connected for drawing off the at least partially cooled exhaust gases, wherein at least one Laval nozzle (16) is connected to the gas converter, via which oxygen and water are nozzled in in a nebulized state.

12. A device according to claim 11, **characterized in that** Laval nozzles (16) for atomizing water with oxygen are arranged to open into the gas converter in the vicinity of a feeding means for the hot exhaust gases.

13. A device according to claim 11 or 12, **characterized in that** evaporation cooling nozzles, moisturizing nozzles or a waste heat boiler (5) are connected as said second stage.

## Revendications

1. Procédé pour refroidir et convertir des gaz d'échappement chauds provenant de réactions de gazéification de pyrolyse de réacteurs à haute température à réduction guidée de métallurgie, de technologie inorganique et de technologie environnementale, dans lequel, dans une première étape, on effectue en utilisant de l'oxygène et de l'eau ou de la vapeur d'eau un refroidissement à des températures comprises entre 605°C et 1.050°C avec une oxydation simultanée de CO et H₂ et de fractions réduites de Zn, Cd, Cu, et/ou Hg, après quoi, dans une seconde étape, on refroidit jusqu'à une température supérieur au point de rosée de l'eau.

2. Procédé selon la revendication 1, **caractérisé en ce que** le refroidissement est effectué en outre avec craquage par pyrohydrolyse de CuCl₂, CuSo₄, ZnCl₂.

3. Procédé selon la revendication 1 ou 2, **caractérisé en ce que**, dans la première étape, de l'eau et/ou de la vapeur d'eau est atomisée avec de l'oxygène techniquement pure.

4. Procédé selon la revendication 1, 2 ou 3, **caractérisé en ce que**, dans la première étape, de l'eau et/ou de la vapeur d'eau est atomisée avec de l'oxygène, techniquement pur et liquide.

5. Procédé selon l'une quelconque des revendications 1 à 4, **caractérisé en ce que**, dans la seconde étape, de l'eau sous pression refroidie indirectement est pulvérisée et/ou de l'eau est pulvérisée ou nébulisée avec de l'air.

6. Procédé selon l'une quelconque des revendications 1 à 5, **caractérisé en ce que** le gaz refroidi dans la seconde étape à des températures supérieures au point de rosée de l'eau est amené à une séparation de matière solide.

7. Procédé selon la revendication 6, **caractérisé en ce que** la séparation de matière solide est réalisée sous forme de filtre ou de cyclon.

8. Procédé selon l'une quelconque des revendications 1 à 7, **caractérisé en ce que** le refroidissement et l'oxydation sont effectués à la première étape à des températures inférieures à la zone plastique de fractions solides dans le gaz.

9. Procédé selon la revendication 8, **caractérisé en ce que** le refroidissement et l'oxydation sont effectués à la première étape à des températures comprises entre 800°C et 1.050°C.

10. Procédé selon l'une quelconque des revendications 1 à 9, **caractérisé en ce que**, dans la première étape, de l'oxygène liquide est introduit sous forme de milieu de blocage de façon concentrique vers une buse de Laval (16) pour la pulvérisation d'eau avec de l'oxygène.

11. Dispositif pour refroidir et convertir des gaz d'échappement chauds, en particulier des gaz de combustion, ou des gaz de réaction provenant de réactions de gazéification ou de pyrolyse de réacteurs à haute température à réduction guidée de métallurgie, de technologie inorganique et de technologie environnementale avec un convertisseur de gaz, dans lequel débouche une conduite (2) pour les gaz d'échappement chauds et auquel est raccordée une conduite (4) pour l'extraction des gaz d'échappement au moins partiellement refroidis, sur laquelle au moins une buse de Laval (16) est raccordée au convertisseur de gaz, par laquelle de l'oxygène et de l'eau sont injectés de façon nébulisée.

12. Dispositif selon la revendication 11, **caractérisé en ce que** des buses de Laval (16) pour la pulvérisation d'eau avec de l'oxygène sont disposées en débouchant sur le convertisseur de gaz à proximité de l'alimentation des gaz d'échappement chauds.

13. Dispositif selon la revendication 11 ou 12, **caractérisé en ce que** des buses de refroidissement par évaporation, des buses d'humidification ou une chaudière à récupération (5) comme seconde étape sont raccordées au convertisseur de gaz.
